# EUROPEAN PATENT SPECIFICATION

(11) **EP 1 837 163 B1**
(45) Date of publication and mention of the grant of the patent: **06.05.2015**
(21) Application number: 07005653.6
(22) Date of filing: 20.03.2007
(51) Int. Cl.: B29C 65/20, B29C 65/78, B29L 12/00, B29L 31/10, E06B 3/96

(54) **Apparatuses and methods for welding objects**
Vorrichtungen und Verfahren zum Schweißen von Objekten
Appareils et procédés pour souder des objets

(30) Priority: 21.03.2006 IT MO20060094
(43) Date of publication of application: 26.09.2007
(73) Proprietor: Emmegi S.P.A., 41010 Limidi di Soliera (MO) (IT)
(72) Inventor: Goffredo, Masetti, 61100 Pesaro (IT)
(74) Representative: Crugnola, Pietro

(56) References cited:
- EP-A1- 1 136 234
- DE-A1- 1 910 309
- DE-A1- 19 506 236

## Description

The invention relates to apparatuses and methods for welding objects, particularly for mutually welding two or more elongated elements, for example made of plastic material, for producing frames of windows and doors.

In order to weld elongated elements made of plastic material, for example PVC, welding machines are known provided with a plurality of moving frames on each one of which an elongated element is laid.

The elongated element is positioned on the respective moving frame and locked on the latter by means of clamps.

The moving frames are moved by pneumatic actuators that bring end regions of the elongated elements in contact with moving heating elements.

Thus, surface portions of said end regions soften and plasticize.

Such pneumatic actuators, then, move the moving frames and the elongated elements supported by the moving frames so as to bring into mutual contact surface portions - previously heated and plasticised - of adjacent elongated elements.

Furthermore, the actuators press the elongated elements against each other, producing between the above-mentioned surface portions a welded joint.

The actuators move the elongated elements at a certain speed and apply on the elongated elements a suitable force for producing a pressure adhesion between the adjacent elongated elements.

A drawback of the known welding machines is that it is very difficult to control the pneumatic actuators.

The speed with which each pneumatic actuator moves the elongated elements and the force that each pneumatic actuator exerts on the elongated elements, particularly on softened end regions of the elongated elements, actually depend on the flow rate and the pressure of the air supplying the actuator, such flow rate and such pressure being manually set by an operator.

The speed with which any pneumatic actuator moves the elongated elements and the force that any pneumatic actuator exerts on the elongated elements cannot, therefore, be modified during a working cycle.

Furthermore, since each pneumatic actuator is controlled independently from the others, it is practically impossible to have a welding machine comprising a plurality of pneumatic actuators exerting the same force and advancing the relative moving elements at the same speed.

Furthermore, the pneumatic actuators of the known welding machines do not provide signals indicative of the working conditions of the machine itself.

Such pneumatic actuators are regulated on the base of test conditions with respect to which the welding machine was calibrated before the start.

Consequently, the parameters of the working cycle - for example the position of each moving frame, the speed with which each pneumatic actuator moves the elongated elements and the force that each pneumatic actuator exerts on the elongated elements - are not detected during the operation and are not automatically corrected for compensating errors caused by fluctuations of friction, wear, or by fluctuations of the physical chemical properties of the materials with which the elongated elements are made.

Consequently, the welding process is scarcely repeatable. Furthermore, the products obtained by mutually welding the elongated elements may be scarcely accurate and of low quality.

A further drawback of the known welding machines is that it is necessary to provide position sensor arranged for detecting the position of the elongated elements.

DE 195 06 336 A1 discloses an apparatus for welding objects, particularly elongated elements of plastic material for frame of windows and doors, according to the preamble of claim 1, the apparatus comprising movable support means arranged for supporting said objects and for blocking said objects and moving means arranged for moving said supporting means, the moving means comprising electromechanical actuating means. The apparatus further comprises supporting means with abutting means and blocking/pressing means.

EP 1 136 234 A1 discloses an apparatus for welding plastic profile bars. The apparatus has a movable slide carriage for clamping a profiled rod and a control unit for monitoring welding and the conveyer force of the drive whereby the conveyer force is variable during welding. The conveyor force is adjusted by the control as a function of the position of the drive and/or as a function of the position of the profiled rod being welded in respect of a heating element and/or as a function of the position of the rod relative to another rod and/or a function of the welding time or machining time. The drive is a pneumatic cylinder chose operating pressure is monitored and regulated for control.

DE 19 10 309 A1 discloses an apparatus for welding objects, particularly elongated elements of plastic material for frames of windows and doors comprising blocking devices for blocking said objects, each blocking devise comprising a fixed jaw, a movable jaw movable along a guide and a rotatable jaw mounted on the movable jaw so as to be able to rotate around a fulcrum. The rotatable jaw is provided at its free end with an adjustable pressing element, which is adjusted depending on the height of the elongated element to be blocked.

An object of the invention is to improve the known welding machines.

A further object is to obtain a welding apparatus that enables the welding operations to be easily controlled and allows greater repeatability, accuracy and quality of the welding operations.

A further object is to obtain a welding apparatus in which objects to be welded can be easily loaded and from which products obtained by welding said objects can be easily withdrawn.

According to the invention, an apparatus is provided for welding objects, particularly elongated elements of plastic material for frames of windows and doors, comprising the features of claim 1.

The electromechanical actuating means enables the supporting means, and the objects associated therewith, to be moved at a controlled and instantaneously detectable speed.

The electromechanical actuating means further enables a force of prefixed magnitude to be applied on the supporting means.

In order to mutually weld objects made of plastic material for obtaining a product there is provided to heat said objects and press such objects mutually into contact. Thus, softened portions of plastic material generate a bulge protruding from the product, the bulge is successively removed from the product by means of mechanical operations of machining.

After said bulge has been removed, a welding bead can be identified on the product, the dimensions of the welding bead depend on the width of a root region of the bulge. Welding beads of large dimensions can constitute faults of the products obtained by welding the above-mentioned objects.

The dimensions and the shape of the bulge depend on the force with which the objects are pressed against each other and the speed with which the objects mutually interact, while the dimensions of the welding bead depend on the final position of the supporting means.

In the known welding machines, the final position of the supporting means depends on the pneumatic actuators.

A nominal final position is established at the time of construction of the known welding machines and cannot be successively modified.

During operation, furthermore, the supporting means can adopt an actual final position that differs from the nominal final position, since the pneumatic actuators are provided with poor repeatability.

Owing to the invention it is possible to regulate the force with which a first object supported by first supporting means is pressed against a second object supported by second supporting means and the moving speed of the first supporting means and of the second supporting means.

As a result, the dimensions of the welding beads can be accordingly uniformly controlled and varied and, particularly, welding beads can be obtained having very reduced dimensions.

Furthermore, in the case of welding apparatuses comprising a plurality of electromechanical actuating means, operating a plurality of supporting means, the electromechanical actuating means can be controlled by means of a single control system, for example a PLC or a CN, in centralised and remote manner.

Since a single control system is used, the supporting means can be moved in synchronous manner.

Furthermore, in the case that a plurality of electromechanical actuating means operates on the same object, it is possible to assure that all the moving parts of the electromechanical actuating means perform the same stroke, or in any way a stroke of desired extent, in order to prevent distortions of a product obtained with the above mentioned object and to assure that such product has predetermined dimensional properties.

Furthermore, the control system allows errors to be instantaneously compensated that are caused by fluctuations of friction, wear, or by fluctuations of the chemical physical properties of the materials with which the elongated elements are made.

In addition, the control system enables the stroke of the moving part of one or more of the electromechanical actuating means to be varied for compensating dimensional differences of the regions of the elongated elements that have to be mutually welded, such dimensional differences can be originated by different shrinkage or wrinkling of the softened plastic material.

Owing to the electromechanical actuating means it is furthermore possible to instantaneously control the position of the supporting means and then to define the final position of the supporting means on which the dimensions of the welding beads depend.

In addition, a position detecting system for detecting the position of the supporting means and of the objects associated therewith is not necessary.

The feedback controlled electro-hydraulic actuating means enables the advantages to be obtained already disclosed with reference to the electromechanical actuating means.

The invention can be better understood and carried out with reference to the enclosed drawing, that illustrate some exemplifying and non-restrictive embodiments thereof, wherein:
Figure 1 is a perspective schematic view of an apparatus for welding objects;
Figure 2 is a perspective view of supporting means of the apparatus of Figure 1;
Figure 3 is a longitudinal cross section of the supporting means of Figure 2;
Figure 4 is a perspective view of moving means associated with the supporting means;
Figures 5 to 13 are schematic plan views of the apparatus of Figure 1 showing successive steps of a working cycle;
Figures 14a, 14b and 14c are longitudinal cross sections of two elongated elements made of plastic material, illustrating successive steps of welding operations of said elongated elements in order to obtain a product;
Figure 15 is a cross section of an elongated element made of plastic material;
Figure 16 is a perspective view of two mutually welded elongated elements of the type of those illustrated in Figure 15;
Figures 17 to 24 are schematic plan views that illustrate the operation of a signalling device with which the welding apparatus is provided;
Figure 25 is a side view of a version of the apparatus for welding objects;
Figure 26 is a side view of a further version of the apparatus for welding objects.

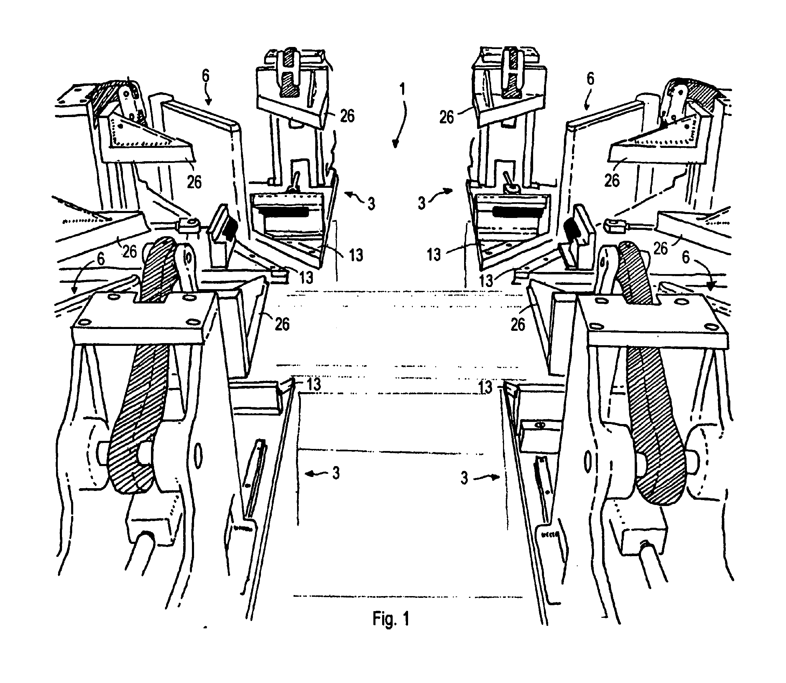

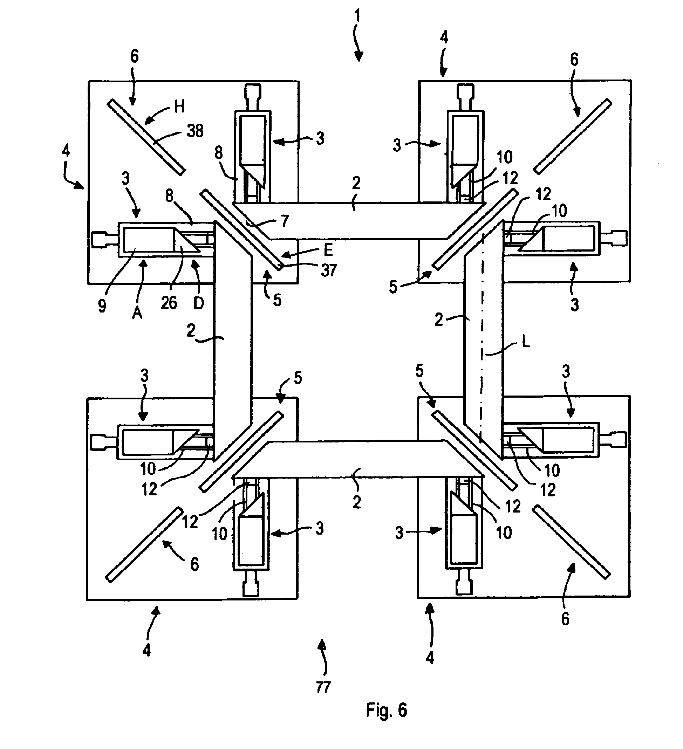

With reference to Figures 1 to 4, an apparatus 1 is shown for producing frames of windows and doors, obtained from mutually welded elongated elements 2 (Figure 6).

The elongated elements 2 are made of plastic material and are cut at their ends so as to define end surfaces 7 (Figure 6) forming an angle of about 45° with respect to a longitudinal axis L of the elongated elements 2.

The apparatus 1 comprises supporting means 3 that supports and blocks the elongated elements 2 during welding.

The apparatus 1 further comprises moving means 4 that moves the supporting means 3.

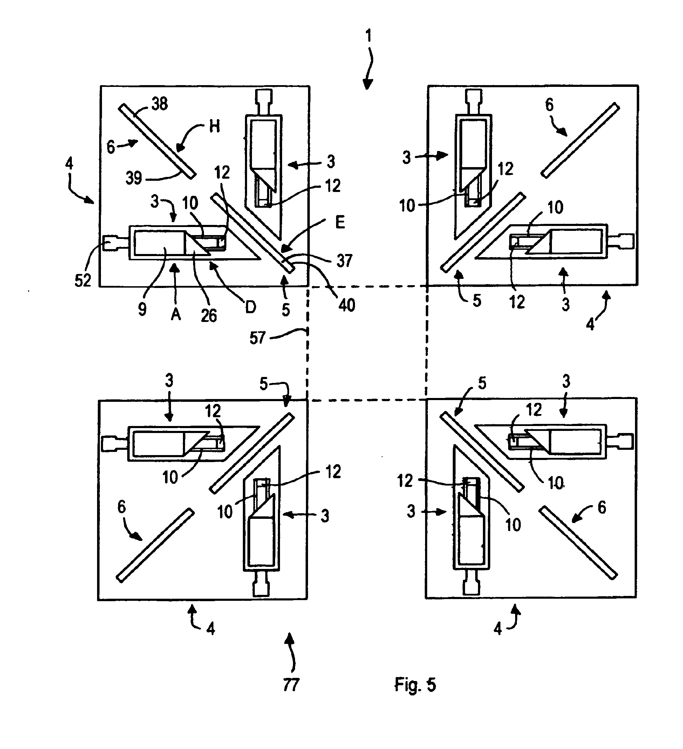

The apparatus 1 comprises abutting means 5 (Figure 5) that enables the elongated elements 2 to be properly positioned on the apparatus 1.

The apparatus 1 comprises heating means 6 (Figure 5) that heats the elongated elements 2, at the end surfaces 7, so as to soften the plastic material forming the elongated elements 2.

The supporting means 3 comprises supporting elements 8 and blocking elements 9.

During operation, the elongated elements 2 are clamped between a supporting element 8 and a blocking element 9 near each end surface 7.

Each supporting element 8 comprises an upper surface 11.

Guiding means 10 is arranged on the upper surface 11, on the guiding means 10 the blocking elements 9 are slidable.

Each supporting element 8 is provided with a block 12 arranged on the upper surface 11, the block 12 defines an abutting element for the elongated elements 2.

The upper surface 11 comprises a contact region 13 arranged for receiving an elongated element 2.

Each blocking element 9 comprises actuating means 16 arranged for moving the blocking element 9 along the guiding means 10, closing means 18 arranged for blocking the elongated elements 2 and a frame 17 supporting the actuating means 16 and the closing means 18.

The actuating means 16 comprises an actuator 20, for example a pneumatic actuator, having a cylinder 41 fixed to the frame 17 by means of fixing elements 22, and a rod 42, slidable with respect to the cylinder 41 and connected by means of an annular element 21 with a bolt 15 screwed in a pin 14 associated with the supporting element 8.

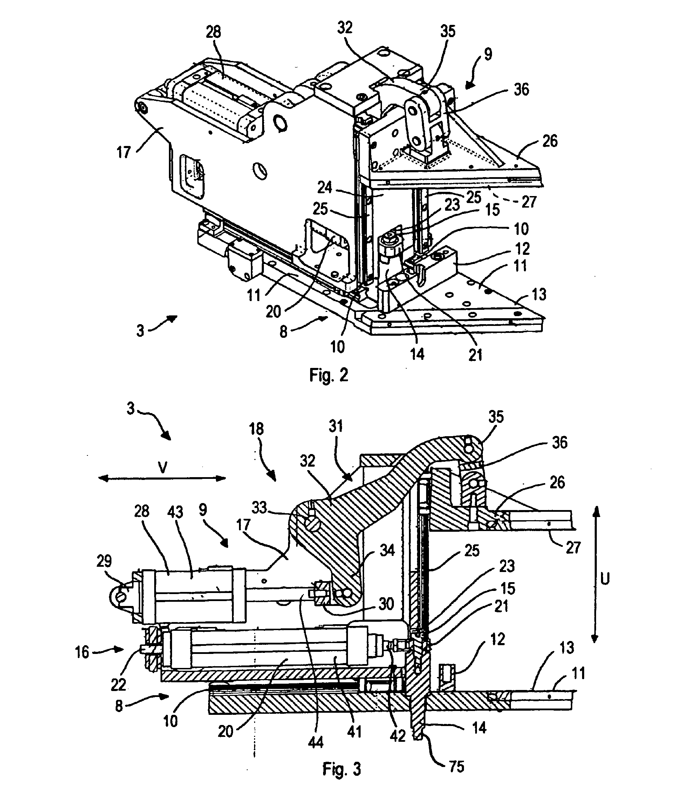

The actuating means 16 moves the blocking element 9 between a retracted position A, schematically shown in Figure 5, in which a closing element 26 of the closing means 18 is spaced apart from the contact region 13, and an advanced position B, shown in the Figure 2 and 3, in which the closing element 26 is substantially superimposed to the contact region 13.

In the retracted position A, the frame 17 is spaced apart from the pin 14, whereas in the advanced position B the pin 14 is received in a cavity 23 of the frame 17.

Further guiding means 25 is arranged on a front surface 24 of the frame 17, the closing element 26 is slidable on the guiding means 25.

The closing element 26 is provided with a further contact region 27 arranged for interacting with the elongated element 2.

The closing means 18 further comprises a further actuator 28, for example a pneumatic actuator, comprising a further cylinder 43 fixed to the frame 17 by means of further fixing elements 29, and a further rod 44, which is slidable with respect to the further cylinder 43 and is connected by means of a fork 30 to redirecting means 31.

The redirecting means 31 is arranged for connecting the further rod 44 with the closing element 26.

The redirecting means 31 enables the further actuator 28 to move the closing element 26 between a blocking position C, in which the further contact region 27 is near the contact region 13, i.e. a position in which, during the working cycle, the elongated element 2 is blocked between the supporting element 8 and the closing element 26, and a disengaging position D, in which the further contact region 27 is spaced apart from the contact region 13, i.e. a position in which, during the working cycle, the elongated element 2 can be laid down on the supporting element 8.

The closing element moves between the blocking position C and the disengaging position D along an operative direction U.

The redirecting means 31 comprises a redirecting lever 32 hinged to the frame 17 by means of a further pin 33.

The redirecting lever 32 comprises a first end 34 hinged to the fork 30 and a second end 35 hinged to a connecting element 36 arranged for connecting the redirecting lever 32 with the closing element 26.

As shown in the Figures 2 and 3, the further actuator 28 is transversally arranged with respect to the operative direction U.

Particularly, the further rod 44 slides with respect to the further cylinder 43 along a sliding direction V that is substantially perpendicular to the operative direction U.

Thus, the closing means 18 has a reduced overall size dimensions parallely to the operative direction U.

Blocking elements 9 comprising actuators arranged transversally to the operative direction U can be advantageously used also in combination with supporting means actuated by pneumatic actuators, as known from the state of the art, instead of electromechanical actuators and with feedback controlled electro-hydraulic actuators, as it will be described more in detail in the following.

Particularly, the apparatus 1 is provided with a plurality of supporting means 3 defining frame means 77 (Figure 5), having quadrangular shape, and arranged for receiving the elongated elements 2, each of such supporting means being provided with a further actuator 28.

Since, the further actuators 28 are substantially coplanar with frame means 77, the elongated elements 2 can be easily positioned on the frame means 77 and products obtained by welding the elongated elements 2 can be easily withdrawn from the frame means 77.

The moving means 4 comprises a base 50 on which still further guiding means 51 is arranged.

The supporting means 3 is slidable on the still further guiding means 51.

First supporting means 3a and second supporting means, not shown, are arranged on each base 50, the first supporting means 3a and the second supporting means being arranged at an angle of 90° with respect to each other.

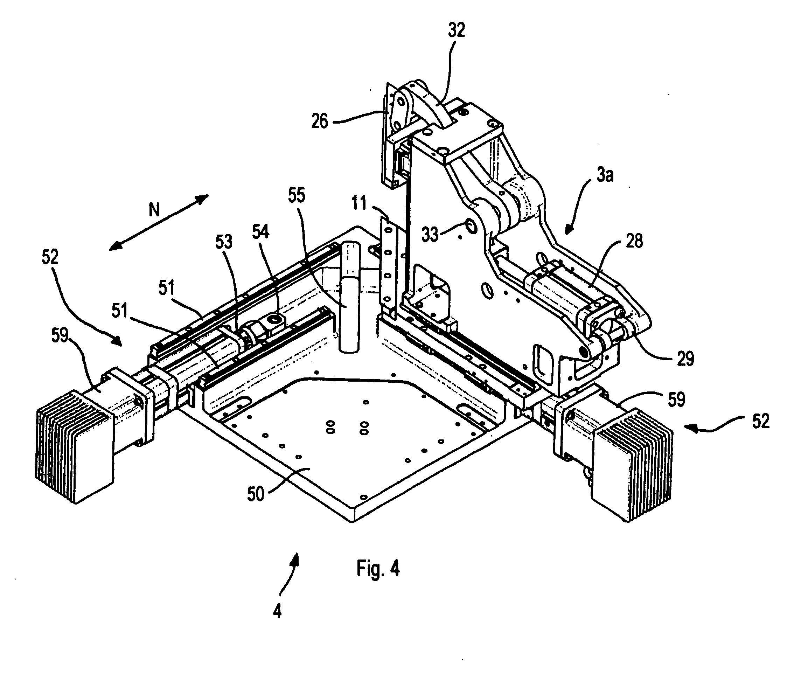

A base 50 is shown in Figure 4 on which the second supporting means has been removed in order to make visible the still further guiding means 51.

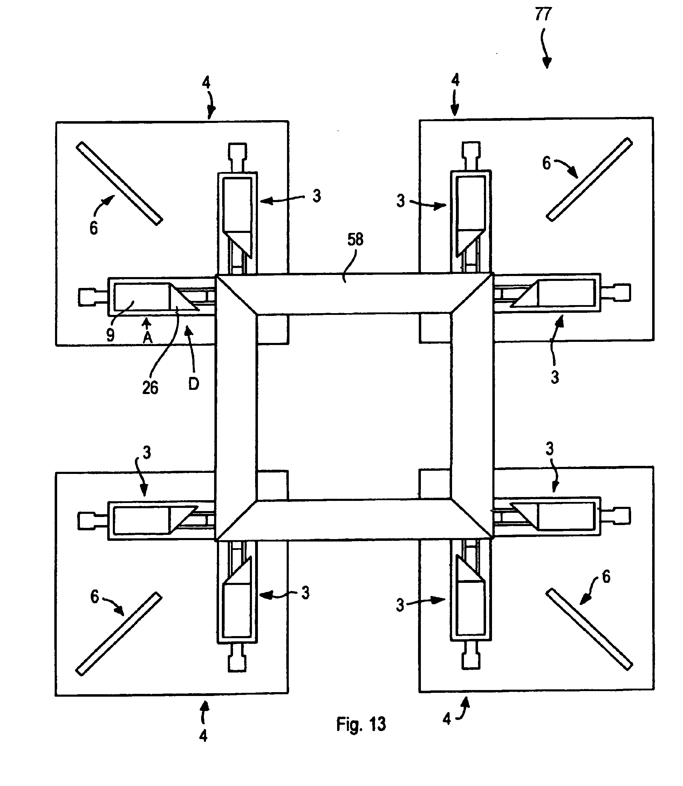

As shown in the Figure 5 to 13, the frame means 77 comprises four bases 50 arranged so as to define the corners of a square 57.

The moving means 4 further comprises electromechanical actuating means 52 having a stationary member 59 and a moving member 53, an end 54 of the moving member 53 is connected with a projection 75 of the pin 14, that projects from the supporting element 8.

In a variant, not shown, the moving means comprises feedback controlled electro-hydraulic actuators instead of electromechanical actuators.

The electromechanical actuating means 52 enables to move each of the supporting means 3 along a moving direction N identified by the still further guiding means 51.

The electromechanical actuating means 52 enables the supporting means 3 to be moved at a predetermined speed.

Such speed may be varied by means of a command and control unit, not shown, such as a PLC, or a CN, connected with the electromechanical actuating means 52.

By connecting a plurality of electromechanical actuating means 52 with the same command and control unit, it is possible to remotely and in synchronised manner move all the supporting means 3.

The moving means 4 further comprises a hole 55, having substantially rectangular shape, that can be passed through by the abutting means 5 during the working cycle, as it will be described in more detail in the following.

The abutting means 5 comprises moving plates 37, provided with side abutting surfaces 40, actuated by guiding devices, not shown.

The abutting means 5 is movable between an operative position E, shown in Figure 5, in which the moving plates 37 projects from the bases 50 for interacting with the end surfaces 7, so as to enable a proper positioning of the elongated elements 2, and a rest position, not shown, in which the moving plates 37 are received into the holes 55 and do not interact with the elongated elements 2.

The heating means 6 comprises heating plates 38, provided with operative side surfaces 39, moved by further guiding devices, not shown.

The further guiding devices move the heating plates 38 along directions identified by the diagonals of the square 57.

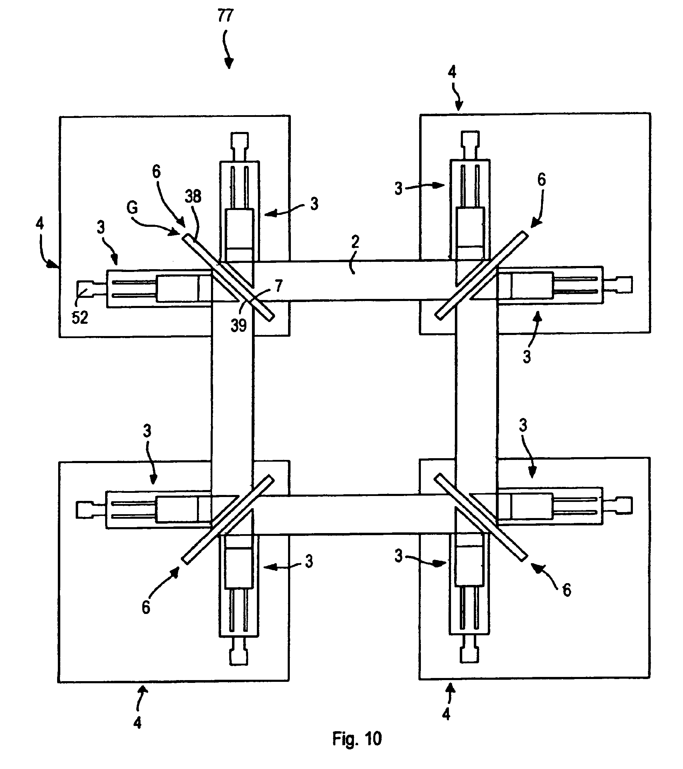

The heating plates 38 are movable between a further operative position G, shown in Figure 10, in which the heating plates 38 are closer to the supporting means 3 for interacting with the end surfaces 7 of the elongated elements 2, so as to heat the end surfaces 7, and a further rest position H, shown in Figure 5, in which the heating plates 38 are more distant from the supporting means 3 and do not interact with the end surfaces 7 of the elongated elements 2.

In a starting step of the working cycle shown in Figure 5, no elongated element 2 has not yet been loaded on the apparatus 1.

The actuating means 16 keeps the blocking elements 9 in the retracted position A, the further actuators 28 keep the closing elements 26 in the disengaging position D and the guiding devices keep the moving plates 37 in the operative position E.

The further guiding devices keep the heating plates 38 in the further rest position H.

The moving means 4 - i.e. the electromechanical actuators 52 - positions the supporting means 3 at a certain distance from the moving plates 37 in order to allow an operator to easily and quickly load the elongated elements 2 on the apparatus 1.

Successively, as shown in Figure 6, the operator arranges four elongated elements 2 on the supporting means 3, the afore said four elongated elements being arranged for forming, once welded, a frame of a window or shutter.

Particularly, each elongated element 2 is received by two supporting elements 8 arranged near the end surfaces 7.

The actuating means 16 keeps the blocking elements 9 in the retracted position A, the further actuators 28 keep the closing elements 26 in the disengaging position D. The guiding devices keep the moving plates 37 in the operative position E.

The further guiding devices keep the heating plates 38 in the further rest position H.

The moving means 4 moving the supporting means 3 spaced apart from the moving plates 37.

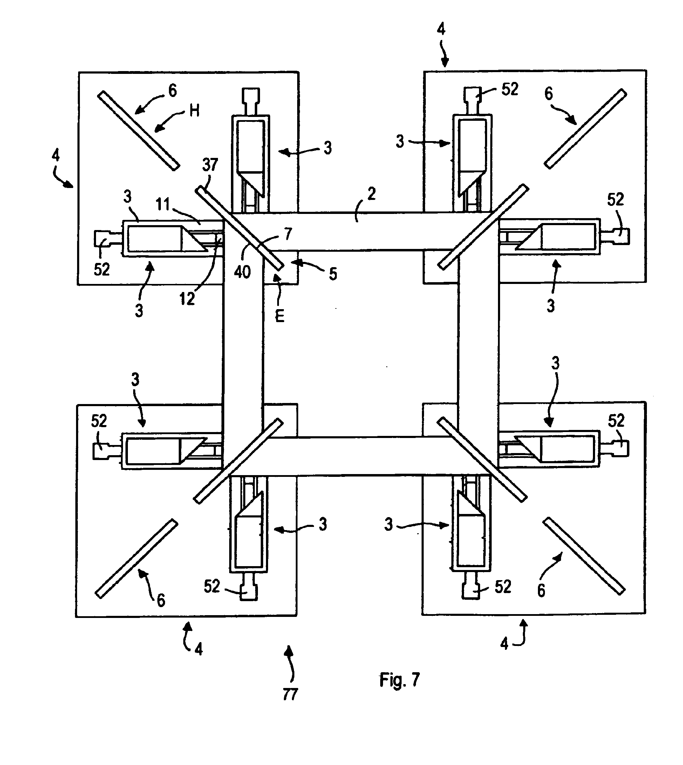

In a successive step of the working cycle shown in Figure 7, the moving means 4 moves the supporting means 3 towards the moving plates 37 in order to bring the end surfaces 7 into contact with the abutting side surfaces 40.

The command and control unit orders the electromechanical actuating means 52 to stop when the elongated elements 2 are clamped between the blocks 12 of the supporting elements 8 and the moving plates 37.

When the end surfaces 7 are in contact with the abutting side surfaces 40, the command and control unit acquires a reference position of the elongated elements 2.

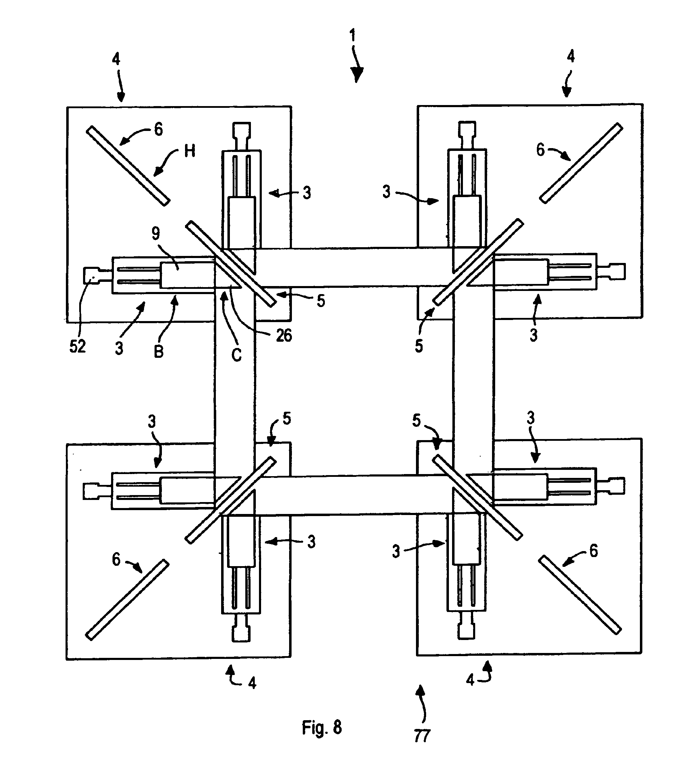

Successively, as shown in Figure 8, the actuating means 16 moves the blocking elements 9 in the advanced position B and the further actuators 28 move the closing elements 26 in the blocking position C.

Thus, the elongated elements 2 are clamped between the contact region 13 and the further contact region 27.

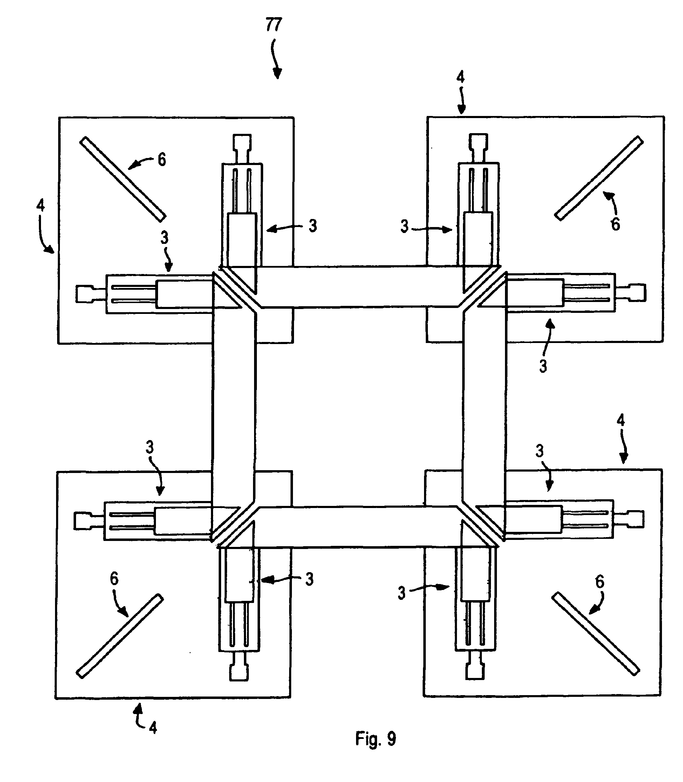

Successively, with reference to the Figure 9, the moving means 4 moves the supporting means 3 away from the moving plates 37 for a distance sufficient for enabling the guiding devices to move the moving plates 37 from the operative position E to the above mentioned rest position, not shown in Figure 9.

The elongated elements 2 remain firmly held between the contact region 13 and the further contact region 27.

In a successive step of the working cycle, shown in Figure 10, the further guiding devices move the heating plates 38 from the further rest position H to the further operative position G.

When the heating plates 38 have reached the further operative position G, the moving means 4 moves the supporting means 3, and the elongated elements 2 associated therewith, in such a manner that the end surfaces 7 are placed into contact with the operative side surfaces 39 of the heating plates 38.

The operative side surfaces 39 are at a temperature such as to soften the plastic material of which the elongated elements 2 are made.

The moving means 4 holds the end surfaces 7 in contact with the operative side surfaces 39 for a time interval of predetermined duration.

During said time interval, the moving means 4 pushes the supporting elements against the operative side surfaces 39, in such a manner that the softened portion of the elongated elements extends over a length of the thickness of said elongated elements and do not involve only a surface region near the end surfaces 7.

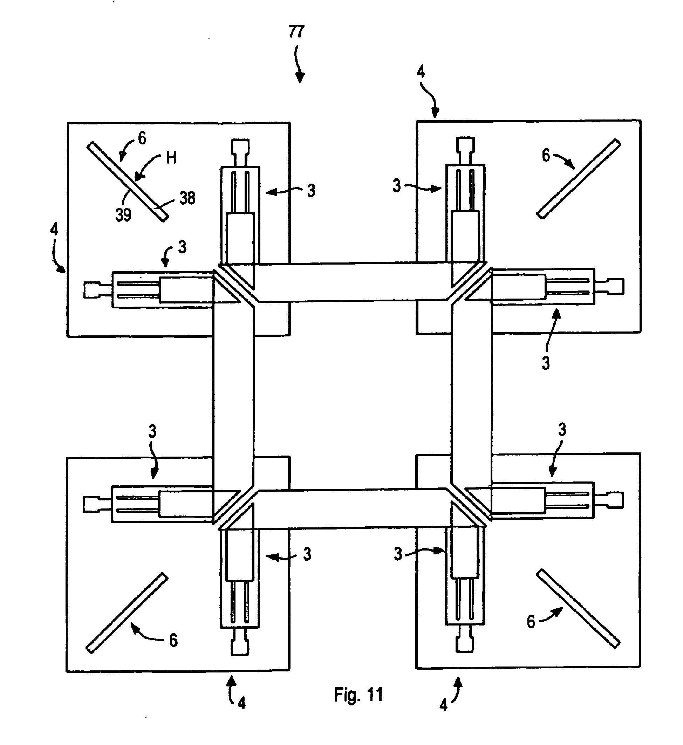

Successively, as shown in Figure 11, the moving means 4 moves the supporting means 3 away from the heating plates 38 for a distance sufficient for enabling the further guiding devices to move the heating plates 38 from the further operative position G to the further rest position H.

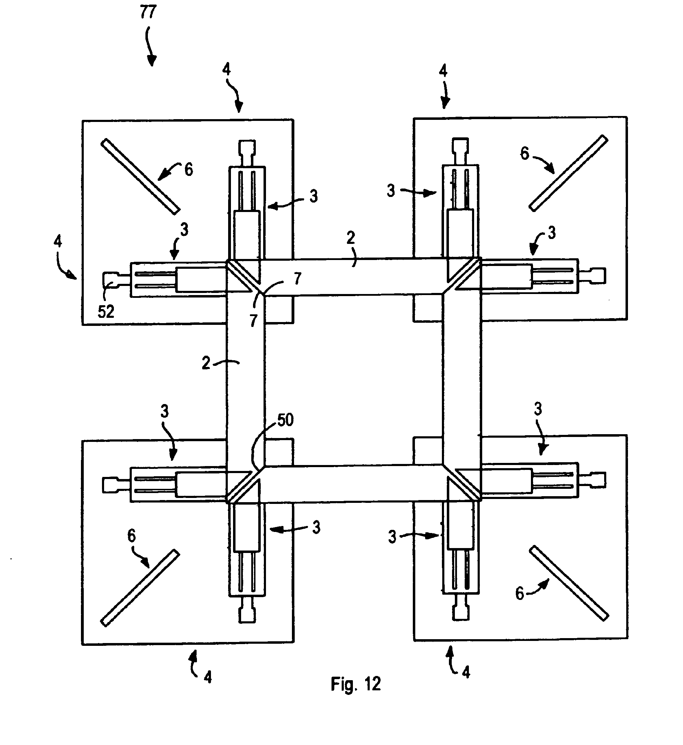

Successively the moving means 4 moves the supporting means 3 near to each other so as to bring into mutual contact the end surfaces 7 of adjacent elongated elements 2, as shown in Figure 12.

The moving means 4 holds the end surfaces 7 mutually in contact for a time interval of prefixed length.

During such time interval, the moving means 4 continues to push the elongated elements 2 against each other.

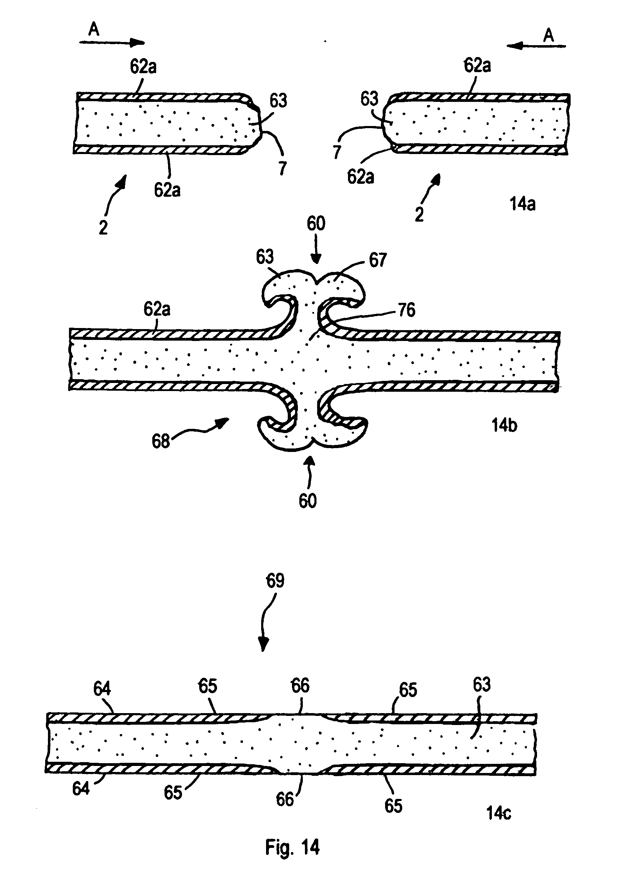

Since the plastic material forming the elongated elements 2, near the end surfaces 7, is softened and has a pasty consistency, between adjacent elongated elements 2 (Figure 14a to 14c) a bulge 60 develops made of the same plastic material.

The electromechanical actuating means 52 enables to control the force with which the elongated elements 2 are pressed mutually into contact and the final position of the supporting means 3 and, consequently, to control the dimensions of a welding bead 66 obtained by removing by means of machining operations the bulge 60.

After the elongated elements 2 were mutually welded and the plastic material forming the bulge 60 was cooled, the further actuators 28 move the closing elements 26 from the blocking position C to the disengaging position D, and the actuating means 16 moves the blocking elements 9 from the advanced position B to the retracted position A, in such a manner that a frame 58 for windows and doors formed by four elongated elements 2 can be withdrawn from the apparatus 1.

Alternatively, can be obtained with the apparatus 1 a frame for windows and doors formed by three elongated elements 2, instead of four elongated elements 2.

Still alternatively, can be obtained with the apparatus 1 semi-finished products formed by two mutually welded elongated elements 2.

In a variant, the frame 58 for windows and doors may be removed from the apparatus 1 by means of a belt, or a tape conveyor.

The Figures 14a to 14c show three successive steps of the welding operations of two elongated elements 2.

The elongated elements 2 are superficially covered by a film 62a, for example made of plastic material, associated with a central body 63 of the elongated elements 2 and arranged for providing a surface finish to a product, for example a frame for windows and doors, produced with the elongated elements 2.

The film 62a may have a decorating pattern adorning the product.

Figure 14a shows the elongated elements 2, provided with regions comprising softened plastic material and arranged near the end surfaces 7, while mutually approaching along a displacement direction A.

Figure 14b shows a portion of a semi-finished product 68 obtained by pressing the elongated elements 2 in contact with each other so that the softened plastic material of the respective regions defines a bulge 60.

The bulge 60 comprises a head 67 and a root 76 both protruding beyond the film 62a.

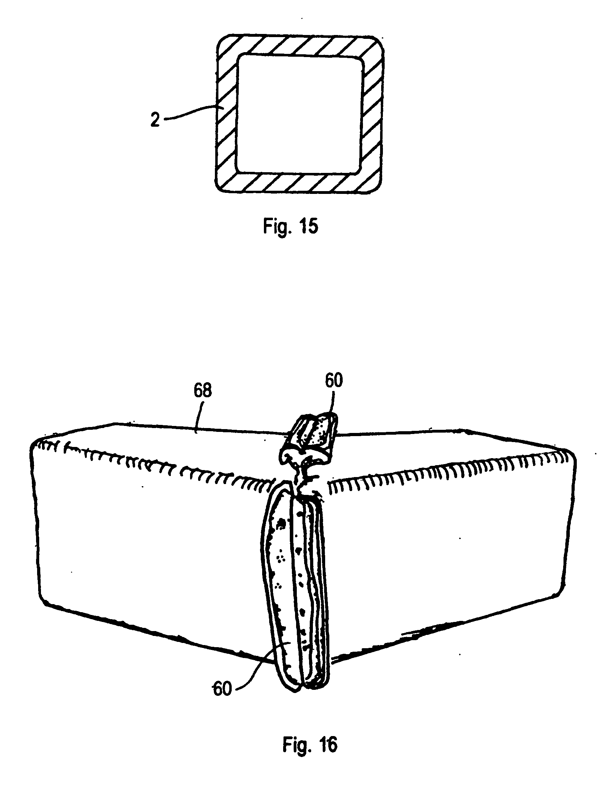

Figure 16 shows a semi-finished product 68 produced with elongated elements 2 of the type shown in Figure 15 and comprising bulges 60.

The bulges 60 have to be removed from the semi-finished product 68, by means of machining operations, for obtaining a product aesthetically and functionally acceptable.

Figure 14c shows a product 69, obtained from the semi-finished product 68 after the bulges 60 have been removed.

An external surface 64 of the product 69 comprises a first region 65 covered by the film 62a and a second region, defining a welding bead 66, from which the film 62a has been removed and at which the body 63 appears at the surface.

Since the properties of the plastic material, for example the colour, or the surface finish, significantly differ from the properties of the film 62a, the welding bead 66 may constitute a failure of the product 69, particularly in the case in which the welding bead 66 has a remarkable transversal size.

In the known welding machines, the pneumatic actuators do not allow to accurately and repeatably regulate the force with which the softened portions of the elongated elements are mutually pressed into contact, nor allow the extent of the relative displacement between the elongated elements to be regulated when the softened portions of the elongated elements are mutually pressed into contact.

That generates bulges of large dimensions and, as a result of the removal of the bulges, very large welding beads.

The products obtained by welding the elongated elements are thus aesthetically scarcely pleasant.

When the known welding machines are produced, is fixed only a single dimension value of the welding bead - the dimension value depending on the final position of the supporting means - generally varying between 0.2 and 2 mm.

The electromechanical actuating means and the feedback controlled electro-hydraulic actuating means of the above described apparatus, instead, enable to control with greater precision the displacements of the elongated elements and the mutual interpenetration of the softened regions.

That enables the dimensions of the root 76 of the bulges 60 and then the dimensions of the welding beads 66 to be determined.

The electromechanical actuating means and the feedback controlled electro-hydraulic actuating means enable, then, bulges 60 to be produced having small roots 76 and respective narrow welding beads 66.

In addition, the electromechanical actuating means and the in feedback controlled electro-hydraulic actuating means enable welding beads to be produced having any dimension varying between 0.2 and 2 mm.

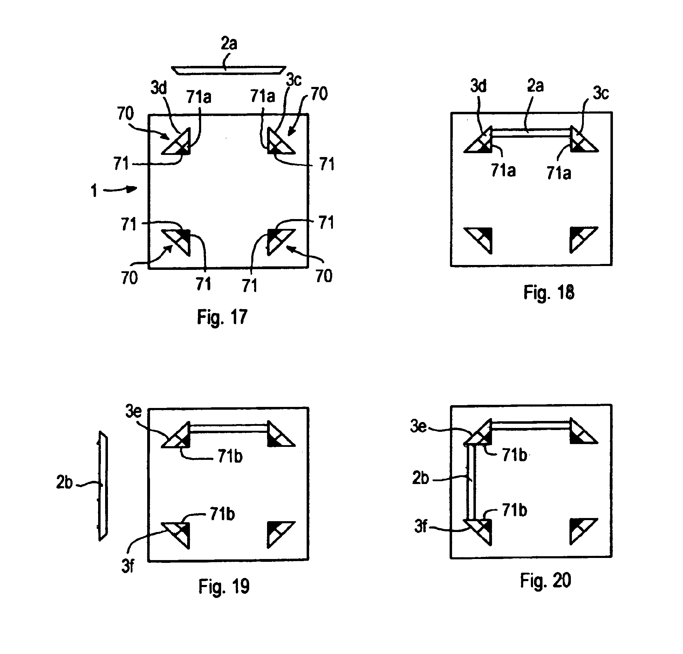

The apparatus 1 may be provided with a signalling device 70, that will be described with reference to the Figures 17 to 24.

The signalling device 70 comprises a plurality of signallers, for example luminous signallers 71.

Alternatively, acoustic signallers or signallers of other type may be provided in addition to, or in substitution for, the luminous signallers 71.

The signalling device 70 comprises a luminous signaller 71 associated with each one of the supporting means 3.

The signalling device 70 provides an operator with indications during the positioning of the elongated elements on the apparatus 1.

Particularly, the luminous signallers 71 provide the operator with indications on a proper positioning sequence of a plurality of elongated elements 2.

In a first positioning step, shown in Figure 17, when no elongated element 2 has been yet loaded on the apparatus 1, first luminous signallers 71a, associated with a first supporting means 3c and with a second supporting means 3d arranged for receiving a first elongated element 2a to be loaded on the apparatus 1, emit a luminous signal that is detected by the operator.

The first supporting means 3c and the second supporting means 3d are arranged at adjacent corners of the square 47 so as to identify a first side of the frame means 77.

The operator provides, then, to position the first elongated element 2a, in such a manner to lay the first elongated element 2a over the first supporting means 3c and over the second supporting means 3d, as shown in Figure 18.

After the operator has positioned the first elongated element 2a over the first supporting means 3c and over the second supporting means 3d, the first luminous signallers 71a stop emitting the luminous signal.

Successively, second signalling means 71b, associated with a third supporting means 3e and with a fourth supporting means 3f arranged for receiving a second elongated element 2b to be loaded on the apparatus 1, emits a luminous signal that is detected by the operator.

The third supporting means 3e and the fourth supporting means 3f are arranged at adjacent corners of the square 47 so as to identify a second side of the frame means 77.

The second supporting means 3d and the third supporting means 3e are arranged at a same corner of the square 47.

The operator provides, then, to position the second elongated element 2b, in such a manner to lay the second elongated element 2b on the third supporting means 3e and the fourth supporting means 3f, as shown in Figure 20.

After the operator has positioned the second elongated element 2b on the third supporting means 3e and the fourth supporting means 3f, the second luminous signallers 71b stop emitting the luminous signal.

The signalling device 70 further comprises third luminous signallers 71c associated with a fifth supporting means 3g and a sixth supporting means 3h arranged for receiving a third elongated element 2c to be loaded on the apparatus 1.

Furthermore, the signalling device 70 comprises fourth luminous signallers 71d associated with a seventh supporting means 3i and an eighth supporting means 31 arranged for receiving a fourth elongated element 2d to be loaded on the apparatus 1.

The fifth supporting means 3g and the sixth supporting means 3h identify a third side of the frame means 77, whereas the seventh supporting means 3i and the eighth supporting means 31 identify a fourth side of the frame means 77.

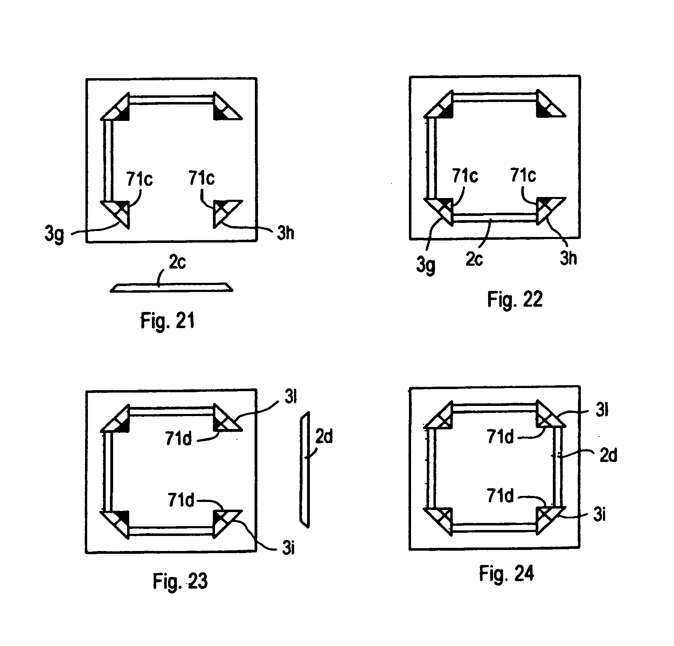

As shown in the Figures 21 and 22, the third luminous signallers 71c emit luminous signals that provide an operator with indications for positioning the third elongated element 2c over the fifth supporting means 3g and the sixth supporting means 3h with modes similar to those described with reference to the Figure 17 to 20.

Similarly, as shown in the Figures 23 and 24, the fourth luminous signallers 71d emit luminous signals that provide an operator with indications for positioning the fourth elongated element 2d over the seventh supporting means 3i and the eighth supporting means 31 with modes analogous to those described with reference to the Figures 17 to 20.

The signalling device 70 can generate signals indicative of any loading sequences of the elongated elements 2, alternatively to the loading sequence shown with reference to the Figures 17 to 24.

The signalling device 70 further provides indications about the particular type of working existing in the apparatus 1.

The luminous signallers 71 can emit different signals, for example for intensity and/or duration and/or frequency, i.e. the time interval between two consecutive luminous emissions, each signal corresponding to a step of the working cycle.

For example, a particular signal can be provided for the heating and welding step of the elongated elements.

Such signal notifies the operator of a situation of potential hazard.

A further signal can be provided indicative of the end of the working cycle.

In that case, the operator can have access to the apparatus 1 in safety conditions.

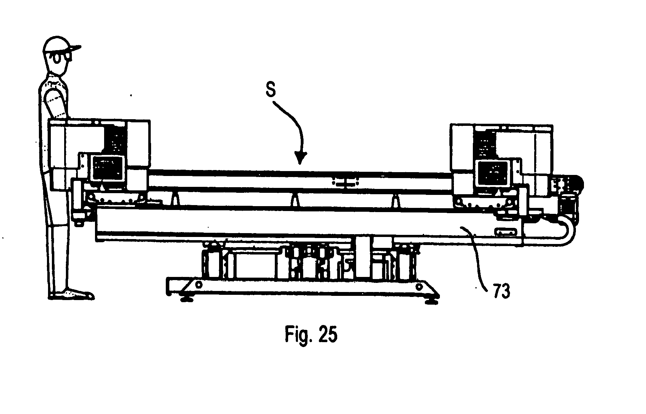

Figure 25 shows a variant of the apparatus 1 in which the supporting means 3 defines a framework 73 that is kept in a substantially horizontal laying position.

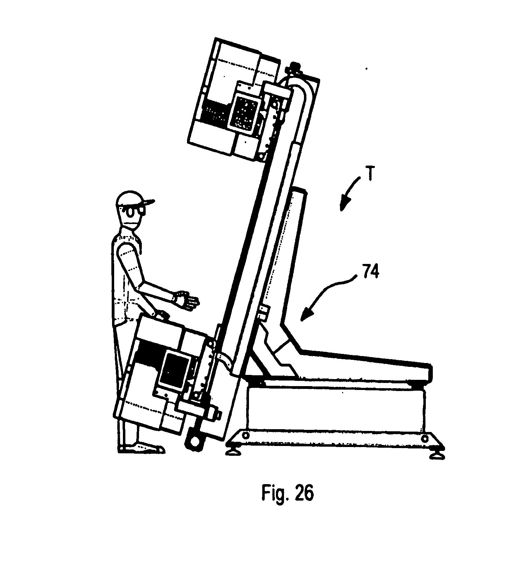

Figure 26 shows a variant of the apparatus provided with motion promoting means 74, that moves the framework 73 between a work configuration S, in which the framework 73 takes up a substantially horizontal laying position, and a loading configuration T, in which the framework takes up an inclined laying position inclined with respect to the horizontal, for example a substantially vertical laying position.

The variant of apparatus shown in Figure 26 enables the elongated elements to be more easily positioned over the supporting means 3.

## Claims

1. Apparatus for welding objects (2), particularly elongated elements of plastic material for frames of windows and doors, comprising movable supporting means (3) arranged for supporting said objects (2) and for blocking said objects (2), moving means (4) arranged for moving said supporting means (3), said moving means (4) comprising electromechanical actuating means (52), or feedback controlled electro-hydraulic actuating means, said supporting means (3) comprising abutting means (8) and blocking means (9), wherein said abutting means (8) comprises guiding means (10), supports said blocking means (9) and cooperates with said blocking means (9) for blocking said objects (2), said blocking means (9) comprising pressing means (26) moving near to, and away from, said abutting means (8) along an operative direction (U), said apparatus further comprising actuating means (20) arranged for moving said blocking means (9) with respect to said abutting means (8) along said guiding means (10), **characterized in that** it comprises further actuating means (28) positioned transversally with respect to said operative direction (U) and arranged for actuating said pressing means (26) and further guiding means (25) extending along said operative direction (U), said further actuating means (28) moving said pressing means (26) along said further guiding means (25).

2. Apparatus according to claim 1, wherein said moving means (4) comprises still further guiding means (51), said electromechanical actuating means (52), or said feedback controlled electro-hydraulic actuating means, moving said abutting means (8) along said still further guiding means (51).

3. Apparatus according to claim 2, wherein said guiding means (10) is arranged substantially parallel to said still further guiding means (51).

4. Apparatus according to any preceding claim, wherein said further actuating means (28) is positioned substantially perpendicularly with respect to said operative direction (U).

5. Apparatus according to claim 4, wherein said further actuating means (28) comprises a first body (43) connected to frame means (17) of said blocking means (9) and a second body (44) connected to said pressing means (26), said first body (43) and said second body (44) being mutually moving along a moving direction (V) substantially perpendicular to said operative direction (U).

6. Apparatus according to claim 5, wherein said blocking means (9) further comprises redirecting means (31) pivotally supported by said frame means (17) and interposed between said further actuating means (28) and said pressing means (26).

7. Apparatus according to any one of the preceding claims, wherein said supporting means comprises a plurality of supporting elements (3).

8. Apparatus according to claim 7, wherein said electromechanical actuating means, or said feedback controlled electro-hydraulic actuating means, comprises, respectively, a plurality of electromechanical actuators, or a plurality of feedback controlled electro-hydraulic actuators, a respective electromechanical actuator (52) of said plurality of electromechanical actuators, or a respective feedback controlled electro-hydraulic actuator of said plurality of in feedback controlled electro-hydraulic actuators being associated with each supporting element (3) of said plurality of supporting elements.

9. Apparatus according to claim 8, and further comprising a command and control unit arranged for commanding and controlling said plurality of electromechanical actuators (52), or said plurality of feedback controlled electro-hydraulic actuators.

10. Apparatus according to any one of claims 7 to 9, wherein said moving means comprises base means (50) with which a supporting element (3a) and a further supporting element of said plurality of supporting elements are associated.

11. Apparatus according to claim 10, wherein said supporting element (3a) and said further supporting element are arranged transversally with respect to each other.

12. Apparatus according to claim 11, wherein said supporting element (3a) and said further supporting element are arranged substantially perpendicularly with respect to each other.

13. Apparatus according to any one of claims 7 to 12, wherein said plurality of supporting elements (3) identify framework means (77) of said apparatus (1).

14. Apparatus according to claim 13, wherein said framework means comprises quadrangular framework means (77).

15. Apparatus according to claim 13, or 14, when claim 13 is appended to any one of claims 10 to 12, wherein a base element (54) of said base means is arranged at corner of said framework means (77).

16. Apparatus according to claim 13, or 14, when claim 13 is appended to any one of claims 10 to 12, or according to claim 15, wherein a respective base (54) of said base means is associated with each corner of said framework means (77).

17. Apparatus according to any one of claims 13 to 16, wherein a pair of supporting elements (3) of said plurality of supporting elements is associated with a side of said framework means (77).

18. Apparatus according to any one of claims 13 to 17, wherein a pair of supporting elements (3) of said plurality of supporting elements is associated with each side of said framework means (77).

19. Apparatus according to claim 17, or 18, wherein said pair of supporting elements comprises a first supporting element (3) and a second supporting element (3) arranged for interacting with opposite ends of said objects (2).

20. Apparatus according to any one of the preceding claims, and further comprising heating means (6) arranged for heating said objects (2).

21. Apparatus according to claim 20, wherein said heating means comprises heating plate means (38) and motor means arranged for moving said heating plate means (38) near to, and away from, said supporting means (3).

22. Apparatus according to claim 21, when claim 20 is appended to any one of claims 13 to 19, wherein a heating plate (38) of said heating plate means is arranged at a corner of said framework means (77).

23. Apparatus according to claim 20, or 21, when claim 20 is appended to any one of claims 13 to 19, or according to claim 22, wherein a respective heating plate (38) of said heating plate means is associated with each corner of said framework means (77).

24. Apparatus according to any one of the preceding claims, and further comprising positioning means (5) arranged for positioning said objects (2) with respect to said supporting means (3).

25. Apparatus according to claim 24, wherein said positioning means comprises abutting plate means (37) and further motor means arranged for moving said abutting plate means (37) near to, and away from, said supporting means (3).

26. Apparatus according to claim 25, when claim 24 is appended to any one of claims 13 to 19, or to any one of claims 20 to 23 if appended to any one of claims 13 to 19, wherein an abutting plate (37) of said abutting plate means is arranged at a corner of said framework means (77).

27. Apparatus according to claim 25 when claim 24 is appended to any one of claims 13 to 19, or to any one of claims 20 to 23 when appended to any one of claims 13 to 19, or according to claim 26, wherein a respective abutting plate (37) of said abutting plate means is associated with each corner of said framework means (77).

28. Apparatus according to claim 25 when claim 24 is appended to any one of claims 13 to 19, or to any one of claims 19 to 23 when appended to any one of claims 13 to 19, or according to claim 26, or 27, wherein said further motor means moves said abutting plate means (37) transversally with respect to said framework means (77).

29. Apparatus according to any one of claims 7 to 19, or according to any one of claims 20 to 28 when appended to any one of claims 7 to 19, and further comprising indicating means (70) arranged for indicating a supporting element (3) of said plurality of supporting elements arranged for receiving an object (2).

30. Apparatus according to claim 29, wherein said indicating means comprises luminous indicating means (71).

31. Apparatus according to claim 29, or 30, wherein said indicating means comprises a plurality of indicating elements (70).

32. Apparatus according to claim 31 when claim 29 is appended to any one of claims 13 to 20, or to any one of claims 20 to 28 when appended to any one of claims 13 to 19, wherein one indicating element (70) of said plurality of indicating elements is associated with a side of said framework means (77).

33. Apparatus according to claim 31 when claim 29 is appended to any one of claims 13 to 20, or to any one of claims 20 to 28 when appended to any one of claims 13 to 19, or according to claim 32, wherein one indicating element (70) of said plurality of indicating elements is associated with each side of said framework means (77).

34. Apparatus according to claim 31 when claim 29 is appended to any one of claims 13 to 20, or to any one of claims 20 to 28 when appended to any one of claims 13 to 19, or according to claim 32, or 33, wherein a pair of indicating elements (71a; 71b; 71c; 71d) of said plurality of indicating elements is associated with a side of said framework means (77).

35. Apparatus according to claim 31 when claim 29 is appended to any one of claims 13 to 20, or to any one of claims 20 to 28 when appended to any one of claims 13 to 19, or according to any one of claims 32 to 34, wherein a pair of indicating elements (71a; 71b; 71c; 71d) of said plurality of indicating elements is associated with each side of said framework means (77).

36. Apparatus according to claim 34, or 35, wherein said pair of indicating elements (71a; 71b; 71c; 71d) comprises a first indicating element and a second indicating element arranged for indicating opposite ends of said objects (2).

37. Apparatus according to any one of claims 29 to 36, wherein said indicating means is arranged for emitting a plurality of different signals, each signal of said plurality of signals being indicative of a step of a working cycle of said apparatus (1).

## Patentansprüche

1. Vorrichtung zum Schweißen von Gegenständen (2), insbesondere länglichen Elementen aus Kunststoffmaterial für Rahmen von Fenstern und Türen, mit beweglichen Haltemitteln (3), die zum Halten der Gegenstände (2) und zum Arretieren der Gegenstände (2) angeordnet sind, Bewegmitteln (4), die zum Bewegen der Haltemittel (3) angeordnet sind, wobei die Bewegmittel (4) elektromechanische Betätigungsmittel (52) oder rückkopplungsgesteuerte elektro-hydraulische Betätigungsmittel aufweisen, wobei die Haltemittel (3) Anlagemittel (8) und Arretiermittel (9) aufweisen, wobei die Anlagemittel (8) Führungsmittel (10) aufweisen, die Arretiermittel (9) halten und mit den Arretiermitteln (9) zum Arretieren der Gegenstände (2) zusammenwirken, wobei die Arretiermittel (9) Drückmittel (26) aufweisen, die sich nahe zu den Anlagemitteln (8) hin und von diesen weg entlang einer Arbeitsrichtung (U) bewegen, wobei die Vorrichtung weiterhin Betätigungsmittel (20) aufweist, die zum Bewegen der Arretiermittel (9) bezüglich der Anlagemittel (8) entlang der Führungsmittel (10) angeordnet sind, **dadurch gekennzeichnet, dass** sie weitere Betätigungsmittel (28), die quer bezüglich der Arbeitsrichtung (U) positioniert und zum Betätigen der Drückmittel (26) angeordnet sind, und weitere Führungsmittel (25) aufweist, die sich entlang der Arbeitsrichtung (U) erstrecken, wobei die weiteren Betätigungsmittel (28) die Drückmittel (26) entlang der weiteren Führungsmittel (25) bewegen.

2. Vorrichtung nach Anspruch 1, wobei die Bewegmittel (4) noch weitere Führungsmittel (51) aufweisen, wobei die elektromechanischen Betätigungsmittel (52) oder die rückkopplungsgesteuerten elektro-hydraulischen Betätigungsmittel die Anlagemittel (8) entlang der noch weiteren Führungsmittel (51) bewegen.

3. Vorrichtung nach Anspruch 2, wobei die Führungsmittel (10) im Wesentlichen parallel zu den noch weiteren Führungsmitteln (51) angeordnet sind.

4. Vorrichtung nach irgendeinem vorhergehenden Anspruch, wobei die weiteren Betätigungsmittel (28) im Wesentlichen senkrecht bezüglich der Arbeitsrichtung (U) positioniert sind.

5. Vorrichtung nach Anspruch 4, wobei die weiteren Betätigungsmittel (28) einen ersten Körper (43), der mit Rahmenmitteln (17) der Arretiermittel (9) verbunden sind, und einen zweiten Körper (44) aufweisen, der mit den Drückmitteln (26) verbunden ist, wobei der erste Körper (43) und der zweite Körper (44) sich wechselseitig entlang einer Bewegungsrichtung (V) bewegen, die im Wesentlichen senkrecht zu der Arbeitsrichtung (U) ist.

6. Vorrichtung nach Anspruch 5, wobei die Arretiermittel (9) weiterhin Umlenkmittel (31) aufweisen, die verschwenkbar durch die Rahmenmittel (17) gehalten und zwischen den weiteren Betätigungsmitteln (28) und den Drückmitteln (26) angeordnet sind.

7. Vorrichtung nach irgendeinem der vorhergehenden Ansprüche, wobei die Haltemittel eine Mehrzahl an Halteelementen (3) aufweisen.

8. Vorrichtung nach Anspruch 7, wobei die elektromechanischen Betätigungsmittel oder die rückkopplungsgesteuerten elektro-hydraulischen Betätigungsmittel eine Mehrzahl an elektromechanischen Aktuatoren bzw. eine Mehrzahl an rückkopplungsgesteuerten elektro-hydraulischen Aktuatoren aufweisen, wobei ein jeweiliger elektromechanischer Aktuator (52) der Mehrzahl an elektromechanischen Aktuatoren bzw. ein jeweiliger rückkopplungsgesteuerter elektro-hydraulischer Aktuator der Mehrzahl an rückkopplungsgesteuerten elektro-hydraulischen Aktuatoren mit jedem Halteelement (3) der Mehrzahl an Halteelementen verknüpft ist.

9. Vorrichtung nach Anspruch 8, und weiterhin mit einer Bedien- und Steuereinheit, die zum Bedienen und Steuern der Mehrzahl an elektromechanischen Aktuatoren (52) oder der Mehrzahl an rückkopplungsgesteuerten elektro-hydraulischen Aktuatoren angeordnet ist.

10. Vorrichtung nach irgendeinem der Ansprüche 7 bis 9, wobei die Bewegmittel Sockelmittel (50) aufweisen, mit denen ein Halteelement (3a) und ein weiteres Halteelement der Mehrzahl an Halteelementen verknüpft ist.

11. Vorrichtung nach Anspruch 10, wobei das Halteelement (3a) und das weitere Halteelement quer zueinander angeordnet sind.

12. Vorrichtung nach Anspruch 11, wobei das Halteelement (3a) und das weitere Halteelement im Wesentlichen senkrecht zueinander angeordnet sind.

13. Vorrichtung nach irgendeinem der Ansprüche 7 bis 12, wobei die Mehrzahl an Halteelementen (3) Rahmenwerkmittel (77) der Vorrichtung (1) bestimmen.

14. Vorrichtung nach Anspruch 13, wobei die Rahmenwerkmittel viereckige Rahmenwerkmittel (77) aufweisen.

15. Vorrichtung nach Anspruch 13 oder 14, wenn Anspruch 13 auf irgendeinen der Ansprüche 10 bis 12 rückbezogen ist, wobei ein Sockelelement (54) der Sockelmittel an einer Ecke der Rahmenwerkmittel (77) angeordnet ist.

16. Vorrichtung nach Anspruch 13 oder 14, wenn Anspruch 13 auf irgendeinen der Ansprüche 10 bis 12 rückbezogen ist, oder nach Anspruch 15, wobei ein jeweiliger Sockel (54) der Sockelmittel mit jeder Ecke der Rahmenwerkmittel (77) verknüpft ist.

17. Vorrichtung nach irgendeinem der Ansprüche 13 bis 16, wobei ein Paar Halteelemente (3) der Mehrzahl an Halteelementen mit einer Seite der Rahmenwerkmittel (77) verknüpft ist.

18. Vorrichtung nach irgendeinem der Ansprüche 13 bis 17, wobei ein Paar Halteelemente (3) der Mehrzahl an Halteelementen mit jeder Seite der Rahmenwerkmittel (77) verknüpft ist.

19. Vorrichtung nach Anspruch 17 oder 18, wobei das Paar Halteelemente ein erstes Halteelement (3) und ein zweites Halteelement (3) aufweist, die zum Wechselwirken mit gegenüberliegenden Enden der Gegenstände (2) angeordnet sind.

20. Vorrichtung nach irgendeinem der vorhergehenden Ansprüche, und weiterhin mit Heizmitteln (6), die zum Heizen der Gegenstände (2) angeordnet sind.

21. Vorrichtung nach Anspruch 20, wobei die Heizmittel Heizplattenmittel (38) und Motormittel aufweisen, die zum Bewegen der Heizplattenmittel (38) nahe zu den Haltemitteln (3) und von diesen weg angeordnet sind.

22. Vorrichtung nach Anspruch 21, wenn Anspruch 20 auf irgendeinen der Ansprüche 13 bis 19 rückbezogen ist, wobei eine Heizplatte (38) der Heizplattenmittel an einer Ecke der Rahmenwerkmittel (77) angeordnet ist.

23. Vorrichtung nach Anspruch 20 oder 21, wenn Anspruch 20 auf irgendeinen der Ansprüche 13 bis 19 rückbezogen ist, oder nach Anspruch 22, wobei eine jeweilige Heizplatte (38) der Heizplattenmittel mit jeder Ecke der Rahmenwerkmittel (77) verknüpft ist.

24. Vorrichtung nach irgendeinem der vorhergehenden Ansprüche, und weiterhin mit Positioniermitteln (5), die zum Positionieren der Gegenstände (2) bezüglich der Haltemittel (3) angeordnet sind.

25. Vorrichtung nach Anspruch 24, wobei die Positioniermittel Anlageplattenmittel (37) und weitere Motormittel aufweisen, die zum Bewegen der Anlageplattenmittel (37) nahe zu den Haltemitteln (3) hin und von diesen weg angeordnet sind.

26. Vorrichtung nach Anspruch 25, wenn Anspruch 24 auf irgendeinen der Ansprüche 13 bis 19 rückbezogen ist, oder nach irgendeinem der Ansprüche 20 bis 23, wenn auf irgendeinen der Ansprüche 13 bis 19 rückbezogen, wobei eine Anlageplatte (37) der Anlageplattenmittel an einer Ecke der Rahmenwerkmittel (77) angeordnet ist.

27. Vorrichtung nach Anspruch 25, wenn Anspruch 24 auf irgendeinen der Ansprüche 13 bis 19 rückbezogen ist, oder nach irgendeinem der Ansprüche 20 bis 23, wenn auf irgendeinen der Ansprüche 13 bis 19 rückbezogen, oder nach Anspruch 26, wobei eine jeweilige Anlageplatte (37) der Anlageplattenmittel mit jeder Ecke der Rahmenwerkmittel (77) verknüpft ist.

28. Vorrichtung nach Anspruch 25, wenn Anspruch 24 auf irgendeinen der Ansprüche 13 bis 19 rückbezogen ist, oder nach irgendeinem der Ansprüche 19 bis 23, wenn auf irgendeinen der Ansprüche 13 bis 19 rückbezogen, oder nach Anspruch 26 oder 27, wobei die weiteren Motormittel die Anlageplattenmittel (37) quer bezüglich der Rahmenwerkmittel (77) bewegen.

29. Vorrichtung nach irgendeinem der Ansprüche 7 bis 19 oder nach irgendeinem der Ansprüche 20 bis 28, wenn auf irgendeinen der Ansprüche 7 bis 19 rückbezogen, und weiterhin mit Anzeigemitteln (70), die zum Anzeigen eines Halteelementes (3) der Mehrzahl an Halteelementen angeordnet sind, das zum Aufnehmen eines Gegenstandes (2) angeordnet ist.

30. Vorrichtung nach Anspruch 29, wobei die Anzeigemittel Leuchtanzeigemittel (71) aufweisen.

31. Vorrichtung nach Anspruch 29 oder 30, wobei die Anzeigemittel eine Mehrzahl an Anzeigeelementen (70) aufweisen.

32. Vorrichtung nach Anspruch 31, wenn Anspruch 29 auf irgendeinen der Ansprüche 13 bis 20 rückbezogen ist, oder nach irgendeinem der Ansprüche 20 bis 28, wenn auf irgendeinen der Ansprüche 13 bis 19 rückbezogen, wobei ein Anzeigeelement (70) der Mehrzahl an Anzeigeelementen mit einer Seite der Rahmenwerkmittel (77) verknüpft ist.

33. Vorrichtung nach Anspruch 31, wenn Anspruch 29 auf irgendeinen der Ansprüche 13 bis 20 rückbezogen ist, oder nach irgendeinem der Ansprüche 20 bis 28, wenn auf irgendeinen der Ansprüche 13 bis 19 rückbezogen, oder nach Anspruch 32, wobei ein Anzeigeelement (70) der Mehrzahl an Anzeigeelementen mit jeder Seite der Rahmenwerkmittel (77) verknüpft ist.

34. Vorrichtung nach Anspruch 31, wenn Anspruch 29 auf irgendeinen der Ansprüche 13 bis 20 rückbezogen ist, oder nach irgendeinem der Ansprüche 20 bis 28, wenn auf irgendeinen der Ansprüche 13 bis 19 rückbezogen, oder nach Anspruch 32 oder 33, wobei ein Paar Anzeigeelemente (71 a; 71 b; 71 c; 71 d) der Mehrzahl an Anzeigeelementen mit einer Seite der Rahmenwerkmittel (77) verknüpft ist.

35. Vorrichtung nach Anspruch 31, wenn Anspruch 29 auf irgendeinen der Ansprüche 13 bis 20 rückbezogen ist, oder nach irgendeinem der Ansprüche 20 bis 28, wenn auf irgendeinen der Ansprüche 13 bis 19 rückbezogen, oder nach irgendeinem der Ansprüche 32 bis 34, wobei ein Paar Anzeigeelemente (71 a; 71 b; 71 c; 71 d) der Mehrzahl an Anzeigeelementen mit jeder Seite der Rahmenwerkmittel (77) verknüpft ist.

36. Vorrichtung nach Anspruch 34 oder 35, wobei das Paar Anzeigeelemente (71 a; 71 b; 71 c; 71 d) ein erstes Anzeigeelement und ein zweites Anzeigeelement aufweist, die zum Anzeigen gegenüberliegender Enden der Gegenstände (2) angeordnet sind.

37. Vorrichtung nach irgendeinem der Ansprüche 29 bis 36, wobei die Anzeigemittel zum Emittieren einer Mehrzahl von unterschiedlichen Signalen angeordnet sind, wobei jedes Signal der Mehrzahl von Signalen auf einen Schritt eines Arbeitszyklus der Vorrichtung (1) hinweist.

## Revendications

1. Appareil pour souder des objets (2), plus particulièrement des éléments allongés en une matière plastique pour armatures de fenêtres et de portes, comprenant des moyens de support déplaçables (3) disposés de manière à supporter lesdits objets (2) et à immobiliser lesdits objets (2), des moyens de déplacement (4) disposés de manière à déplacer lesdits moyens de support (3), lesdits moyens de déplacement (4) comprenant des moyens d'actionnement électromécaniques (52), ou des moyens d'actionnement électrohydrauliques commandés par rétroaction, lesdits moyens de support (3) comprenant des moyens de butée (8) et des moyens d'immobilisation (9), dans lesquels lesdits moyens de butée (8) comprennent des moyens de guidage (10), supportent lesdits moyens d'immobilisation (9) et coopèrent avec lesdits moyens d'immobilisation (9) pour immobiliser lesdits objets (2), lesdits moyens d'immobilisation (9) comprenant des moyens de pression (26) se déplaçant en direction, et en s'en éloignant, desdits moyens de butée (8) le long d'une direction de fonctionnement (U), ledit appareil comprenant en outre des moyens d'actionnement (20) disposés de manière à déplacer lesdits moyens d'immobilisation (9) par rapport auxdits moyens de butée (8) le long desdits moyens de guidage (10), **caractérisé en ce qu'**il comprend des moyens d'actionnement supplémentaires (28), mis en place transversalement par rapport à ladite direction de fonctionnement (U) et disposés de manière à actionner lesdits moyens de pression (26), et des moyens de guidage supplémentaires (25) s'étendant le long de ladite direction de fonctionnement (U), lesdits moyens d'actionnement supplémentaires (28) déplaçant lesdits moyens de pression (26) le long desdits moyens de guidage supplémentaires (25).

2. Appareil selon la revendication 1, dans lequel lesdits moyens de déplacement (4) comprennent des moyens de guidage encore supplémentaires (51), lesdits moyens d'actionnement électromécaniques (52), ou lesdits moyens d'actionnement électrohydrauliques commandés par rétroaction, déplaçant lesdits moyens de butée (8) le long desdits moyens de guidage encore supplémentaires (51).

3. Appareil selon la revendication 2, dans lequel lesdits moyens de guidage (10) sont disposés de manière sensiblement parallèle auxdits moyens de guidage encore supplémentaires (51).

4. Appareil selon une quelconque revendication précédente, dans lequel lesdits moyens d'actionnement supplémentaires (28) sont mis en place de manière sensiblement perpendiculaire par rapport à ladite direction de fonctionnement (U).

5. Appareil selon la revendication 4, dans lequel lesdits moyens d'actionnement supplémentaires (28) comprennent un premier corps (43) relié à des moyens d'armature (17) desdits moyens d'immobilisation (9) et un deuxième corps (44) relié auxdits moyens de pression (26), ledit premier corps (43) et ledit deuxième corps (44) étant déplaçables l'un par rapport à l'autre le long d'une direction de déplacement (V) sensiblement perpendiculaire à ladite direction de fonctionnement (U).

6. Appareil selon la revendication 5, dans lequel lesdits moyens d'immobilisation (9) comprennent en outre des moyens de réorientation (31) supportés de manière pivotante par lesdits moyens d'armature (17) et interposés entre lesdits moyens d'actionnement supplémentaires (28) et lesdits moyens de pression (26).

7. Appareil selon l'une quelconque des revendications précédentes, dans lequel lesdits moyens de support comprennent une pluralité d'éléments de support (3).

8. Appareil selon la revendication 7, dans lequel lesdits moyens d'actionnement électromécaniques, ou lesdits moyens d'actionnement électrohydrauliques commandés par rétroaction, comprennent, respectivement, une pluralité de dispositifs d'actionnement électromécaniques, ou une pluralité de dispositifs d'actionnement électrohydrauliques commandés par rétroaction, un dispositif d'actionnement électromécanique (52) respectif de ladite pluralité de dispositifs d'actionnement électromécaniques ou un dispositif d'actionnement électrohydraulique commandé par rétroaction de ladite pluralité de dispositifs d'actionnement électrohydrauliques commandés par rétroaction étant associé à chaque élément de support (3) de ladite pluralité d'éléments de support.

9. Appareil selon la revendication 8, et comprenant en outre une unité de commande et de contrôle disposée de manière à commander et contrôler ladite pluralité de dispositifs d'actionnement électromécaniques (52) ou ladite pluralité de dispositifs d'actionnement électrohydrauliques commandés par rétroaction.

10. Appareil selon l'une quelconque des revendications 7 à 9, dans lequel lesdits moyens de déplacement comprennent des moyens de base (50) auxquels un élément de support (3a) et un élément de support supplémentaire de ladite pluralité d'éléments de support sont associés.

11. Appareil selon la revendication 10, dans lequel ledit élément de support (3a) et ledit élément de support supplémentaire sont disposés transversalement l'un par rapport à l'autre.

12. Appareil selon la revendication 11, dans lequel ledit élément de support (3a) et ledit élément de support supplémentaire sont disposés de manière sensiblement perpendiculaire l'un par rapport à l'autre.

13. Appareil selon l'une quelconque des revendications 7 à 12, dans lequel ladite pluralité d'éléments de support (3) identifie des moyens d'armature (77) dudit appareil (1).

14. Appareil selon la revendication 13, dans lequel lesdits moyens d'armature comprennent des moyens d'armature quadrangulaires (77).

15. Appareil selon la revendication 13 ou 14, lorsque la revendication 13 est dépendante de l'une quelconque des revendications 10 à 12, dans lequel un élément de base (54) desdits moyens de base est disposé au niveau d'un coin desdits moyens d'armature (77).

16. Appareil selon la revendication 13 ou 14, lorsque la revendication 13 est dépendante de l'une quelconque des revendications 10 à 12, ou selon la revendication 15, dans lequel une base respective (54) desdits moyens de base est associée à chaque coin desdits moyens d'armature (77).

17. Appareil selon l'une quelconque des revendications 13 à 16, dans lequel une paire d'éléments de support (3) de ladite pluralité d'éléments de support est associée à un côté desdits moyens d'armature (77).

18. Appareil selon l'une quelconque des revendications 13 à 17, dans lequel une paire d'éléments de support (3) de ladite pluralité d'éléments de support est associée à chaque côté desdits moyens d'armature (77).

19. Appareil selon la revendication 17 ou 18, dans lequel ladite paire d'éléments de support comprend un premier élément de support (3) et un deuxième élément de support (3) disposés de manière à interagir avec des extrémités opposées desdits objets (2).

20. Appareil selon l'une quelconque des revendications précédentes, et comprenant en outre des moyens de chauffage (6) disposés de manière à chauffer lesdits objets (2).

21. Appareil selon la revendication 20, dans lequel lesdits moyens de chauffage comprennent des moyens de plaques de chauffage (38) et des moyens de moteur disposés de manière à déplacer lesdits moyens de plaques de chauffage (38) en direction, et en s'en éloignant, desdits moyens de support (3).

22. Appareil selon la revendication 21, lorsque la revendication 20 est dépendante de l'une quelconque des revendications 13 à 19, dans lequel une plaque de chauffage (38) desdits moyens de plaques de chauffage est disposée au niveau d'un coin desdits moyens d'armature (77).

23. Appareil selon la revendication 20 ou 21, lorsque la revendication 20 est dépendante de l'une quelconque des revendications 13 à 19, ou selon la revendication 22, dans lequel une plaque de chauffage respective (38) desdits moyens de plaques de chauffage est associée à chaque coin desdits moyens d'armature (77).

24. Appareil selon l'une quelconque des revendications précédentes, et comprenant en outre des moyens de mise en place (5) disposés de manière à mettre en place lesdits objets (2) par rapport auxdits moyens de support (3).

25. Appareil selon la revendication 24, dans lequel lesdits moyens de mise en place comprennent des moyens de plaques de butée (37) et des moyens de moteur supplémentaires disposés de manière à déplacer lesdits moyens de plaques de butée (37) en direction, et en s'en éloignant, desdits moyens de support (3).

26. Appareil selon la revendication 25, lorsque la revendication 24 est dépendante de l'une quelconque des revendications 13 à 19, ou selon l'une quelconque des revendications 20 à 23 si celles-ci sont dépendantes de l'une quelconque des revendications 13 à 19, dans lequel une plaque de butée (37) desdits moyens de plaques de butée est disposée au niveau d'un coin desdits moyens d'armature (77).

27. Appareil selon la revendication 25, lorsque la revendication 24 est dépendante de l'une quelconque des revendications 13 à 19, ou selon l'une quelconque des revendications 20 à 23 lorsque celles-ci sont dépendantes de l'une quelconque des revendications 13 à 19, ou selon la revendication 26, dans lequel une plaque de butée respective (37) desdits moyens de plaques de butée est associée à chaque coin desdits moyens d'armature (77).

28. Appareil selon la revendication 25, lorsque la revendication 24 est dépendante de l'une quelconque des revendications 13 à 19, ou selon l'une quelconque des revendications 19 à 23 lorsque celles-ci sont dépendantes de l'une quelconque des revendications 13 à 19, ou selon la revendication 26 ou 27, dans lequel lesdits moyens de moteur supplémentaires déplacent lesdits moyens de plaques de butée (37) de manière transversale par rapport auxdits moyens d'armature (77).

29. Appareil selon l'une quelconque des revendications 7 à 19, ou selon l'une quelconque des revendications 20 à 28 lorsque celles-ci sont dépendantes de l'une quelconque des revendications 7 à 19, et comprenant en outre des moyens d'indication (70) disposés de manière à indiquer un élément de support (3) de ladite pluralité d'éléments de support disposés de manière à recevoir un objet (2).

30. Appareil selon la revendication 29, dans lequel lesdits moyens d'indication comprennent des moyens d'indication lumineux (71).

31. Appareil selon la revendication 29 ou 30, dans lequel lesdits moyens d'indication comprennent une pluralité d'éléments d'indication (70).

32. Appareil selon la revendication 31, lorsque la revendication 29 est dépendante de l'une quelconque des revendications 13 à 20, ou selon l'une quelconque des revendications 20 à 28 lorsque celles-ci sont dépendantes de l'une quelconque des revendications 13 à 19, dans lequel un élément d'indication (70) de ladite pluralité d'éléments d'indication est associé à un côté desdits moyens d'armature (77).

33. Appareil selon la revendication 31, lorsque la revendication 29 est dépendante de l'une quelconque des revendications 13 à 20, ou selon l'une quelconque des revendications 20 à 28 lorsque celles-ci sont dépendantes de l'une quelconque des revendications 13 à 19, ou selon la revendication 32, dans lequel un élément d'indication (70) de ladite pluralité d'éléments d'indication est associé à chaque côté desdits moyens d'armature (77).

34. Appareil selon la revendication 31, lorsque la revendication 29 est dépendante de l'une quelconque des revendications 13 à 20, ou selon l'une quelconque des revendications 20 à 28 lorsque celles-ci sont dépendantes de l'une quelconque des revendications 13 à 19, ou selon la revendication 32 ou 33, dans lequel une paire d'éléments d'indication (71a ; 71b ; 71c ; 71d) de ladite pluralité d'éléments d'indication est associée à un côté desdits moyens d'armature (77).

35. Appareil selon la revendication 31, lorsque la revendication 29 est dépendante de l'une quelconque des revendications 13 à 20, ou selon l'une quelconque des revendications 20 à 28 lorsque celles-ci sont dépendantes de l'une quelconque des revendications 13 à 19, ou selon l'une quelconque des revendications 32 à 34, dans lequel une paire d'éléments d'indication (71a ; 71b ; 71c ; 71d) de ladite pluralité d'éléments d'indication est associée à chaque côté desdits moyens d'armature (77).

36. Appareil selon la revendication 34 ou 35, dans lequel ladite paire d'éléments d'indication (71a; 71b; 71c ; 71d) comprend un premier élément d'indication et un deuxième élément d'indication disposés de manière à indiquer des extrémités opposées desdits objets (2).

37. Appareil selon l'une quelconque des revendications 29 à 36, dans lequel lesdits moyens d'indication sont disposés de manière à émettre une pluralité de signaux différents, chaque signal de ladite pluralité de signaux étant indicateur d'une étape d'un cycle de fonctionnement dudit appareil (1).
